# EUROPEAN PATENT SPECIFICATION

(11) **EP 1 927 450 B1**
(45) Date of publication and mention of the grant of the patent: **27.03.2013**
(21) Application number: 06810247.4
(22) Date of filing: 19.09.2006
(51) Int. Cl.: B29D 30/10, B29C 33/02, B29C 35/02, B29L 30/00

(54) **PROCESS FOR PRODUCING TIRE AND TIRE VULCANIZATION MOLD**
VERFAHREN ZUR HERSTELLUNG EINES REIFENS UND REIFENVULKANISIERFORM
PROCEDE DE FABRICATION D UN PNEUMATIQUE ET MOULE DE VULCANISATION DE PNEUMATIQUE

(30) Priority: 20.09.2005 JP 2005271703
(43) Date of publication of application: 04.06.2008
(73) Proprietor: Bridgestone Corporation, Tokyo 104-8340 (JP)
(72) Inventor: OGAWA, Yuichiro, Kodaira-shi Tokyo 187-8531 (JP)
(74) Representative: Waldren, Robin Michael
(86) International application number: PCT/JP2006/318505
(87) International publication number: WO 2007/034779

(56) References cited:
- EP-A1- 0 604 984
- EP-A1- 1 506 852
- EP-A2- 0 441 150
- GB-A- 1 542 133
- JP-A- 06 246 751
- JP-A- 2000 084 937
- JP-A- 2000 351 121
- JP-A- 2002 178 334
- JP-A- 2002 264 134

## Description

### TECHNICAL FIELD

This invention relates to a method for manufacturing a tire and a tire curing mold utilized for this method, the method comprising steps of: forming green tire by assembling tire components on a rigid core having an outer surface corresponding to the inner surface shape of a product tire, preheating said green tire with the rigid core attached, and curing said green tire in a curing mold, for manufacturing a tire having carcass turn-up structure around a bead core, especially relates to the method and the mold capable of preventing possible bead portion failure due to the temperature rise while preheating the green tire.

### RELATED ART

There are already known tire manufacturing methods which comprise steps of; forming a green tire by assembling tire components on a rigid core having an outer surface corresponding to the inner surface shape of a product tire, placing said green tire in a curing mold and curing it (See Patent Document 1 and 2), and according to these methods, an extremely precise tire can be obtained, since every tire components are assembled in the same shape as they are in the product tire from the beginning of green tire forming, therefore, a tire has no residual stress compared to a tire manufactured by a method wherein a green tire formed into a different shape from that of the product tire is afterwards deformed into the shape of the product tire.

In a tire manufacturing method utilizing a rigid core, as explained above, it is widely performed to preheat a green tire, for example, by keeping it in a preheating station where the temperature is maintained at a predetermined degree, before it is placed into the curing mold, in order to shorten curing time. This is performed because in case of the process without preheating, it is necessary to heat up not only a tire but also a rigid core having a large heat capacity, in the curing mold, and the additional heating for a rigid core requires excessive curing time.

In the tire manufacturing method aforementioned, a green tire finished with its forming is transferred into a curing mold through the preheating station together with the rigid core attached, then cured in the curing mold, and afterwards, a cured tire is unloaded from a rigid core, then shipped through inspection process, while the rigid core is left to be cooled for the next green tire building,

Patent Document 1: Japanese Patent Application Laid-open No. 2000-084937 (JP2000084937 A)

Patent Document 2: Japanese Patent Application Laid-open No. 2002-264134 (JP2002264134 A)

Reference is also made to the following publications:
EP-A-1506852
GB1542133
EP-A-0441150
EP-A-0604984
JP2000 351121
JP2002 178334
JP06 246751
EP-A-0441150 discloses a bladdesters vulcanising press for tires.

### DISCLOSURE OF THE INVENTION

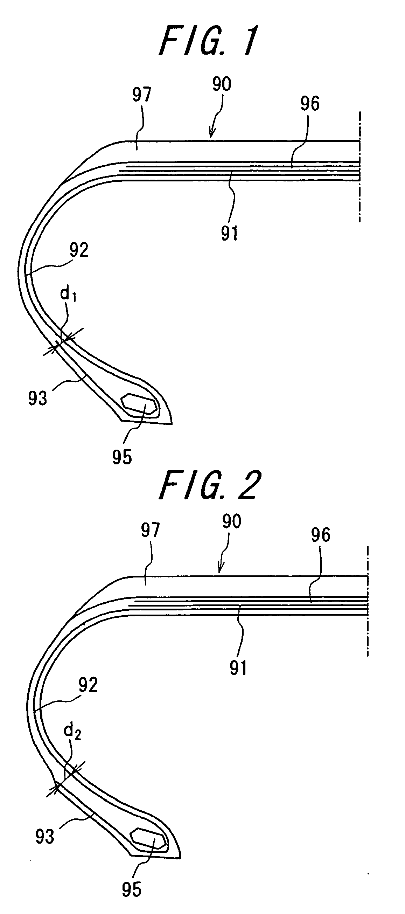

Fig 1 is a cross-sectional view showing an example of a construction of a green tire manufactured according to the abovementioned method. A green tire 90 is configured so that a radial carcass composed of at least one carcass ply 91 is disposed extending between a pair of bead cores 95, and a belt 96 and a tread rubber 97 are disposed outside the radial carcass. In this case, for fixing a radial carcass to the bead cores 95, a structure, wherein a pair of side portions 93 of the carcass ply are turned up around the bead cores 95, and stuck to the main portion 92 of the carcass ply extending between a pair of bead cores 95, is widely adopted. And, as a cord constituting the carcass ply consists of woven organic fiber, or woven steel filament especially for a heavy loading tire.

It has been made clear that when manufacturing a green tire with a carcass ply comprising woven steel filament cords, there may occur the failure such that the side portion 93 of the carcass ply turned up around bead core 95 and the main portion 92 of the carcass ply, which were once stuck each other in tire building process as shown in Fig.1 (In this state, the distance between center lines of side potion and main portion of the carcass ply in the thickness direction is d1), are moved apart from each other as shown in Fig.2 (In this state, the distance between center lines of side potion and main portion of the carcass ply in the thickness direction is d2) due to the heat during the preheating process.

This is because the force to push back the side portion of the carcass ply to the state before it was turned up, is generated when the temperature rises at a folded portion of the carcass ply during the preheating process, as the temperature rise reduces the internal residual stress which was developed when the side portion of the carcass ply was turned up, due to high rigidity of the steel cords.

This invention has been conceived in view of such a problem, and it is, therefore, an object of the present invention to provide a method of manufacturing tires and curing mold for said method, capable of preventing such a failure that the turned-up portion and the main portion of the carcass are moved apart from each other.

(1) The present invention provides a method of manufacturing a tire, according to claim 1.

(2) The present invention further provides a method of manufacturing a tire according to the invention in item (1), comprising a step of placing the green tire in the curing mold together with the bead-holding rings attached on the rigid core.

(3) The present invention further provides a method of manufacturing tires according to the invention in item (1) or (2), wherein the step of assembling the pair of bead-holding rings to the rigid core is performed by connecting the pair of bead-holding rings to each other.

(4) The present invention further provides a tire curing mold, according to claim 7.

According to the invention in item (1), a pair of bead-holding rings are assembled to the rigid core prior to said preheating step, wherein each bead-holding ring holds a corresponding bead portion from the lateral outside, so that a pair of bead-holding rings restrain the deformation of the bead portions even while they are being heated, as a result, it can be prevented the side portions being moved apart from the main portion of the carcass ply.

According to the invention in item (2), the green tire is placed in the curing mold together with the bead-holding rings attached on the rigid core, so that a pair of bead-holding rings restrict deformation of the bead portions until deformation for restoration in the steel cords of the side portions of the carcass ply is kept under restraint by the adjacent cured rubber at the end of tire curing process, therefore, it is capable for preventing the side portions of the carcass ply being moved apart from the main portion.

According to the invention in item (3), assembling the pair of bead-holding rings to the rigid core is being made by connecting the pair of bead-holding rings each other, so that bead potion holding can be performed assuredly.

According to the invention in item (4), a tire curing mold comprises a tread-mold specifying an outer surface shape of tire tread portion, the tread-mold consisting of plural segments disposed in the tire circumferential direction, a pair of sidewall-molds specifying an outer surface shape of tire sidewall portions, and a pair of bead-molds specifying an outer surface shape of tire bead portions, said each bead-mold consisting of said bead-holding ring, so that deformation in the bead portions can be restrained by means of bead-holding rings, and additionally, tire outer surface can be molded to be continuous by configuring the sidewall-molds so as not to interfere with bead-holding rings.

### BRIEF DESCRIPTION OF THE DRAWINGS

[Fig. 1] Fig.1 is a cross-sectional view showing the structure of a green tire.
[Fig. 2] Fig.2 is a cross-sectional view of a green tire, wherein the side portions of the carcass ply are moved apart from the main portion.
[Fig. 3] Fig.3 is a schematic cross-sectional view of a tire at a stage under the step of green tire forming of the present invention.
[Fig. 4] Fig.4 is a schematic cross-sectional view of a tire at a stage following the one shown in Fig.3.
[Fig. 5] Fig.5 is a schematic cross-sectional view of a tire at a stage under the step of preheating.
[Fig. 6] Fig.6 is a schematic cross-sectional view of a tire a tire at a stage under the step of curing.
[Fig. 7] Fig.7 is a schematic cross-sectional view of a tire at a stage following the one shown in Fig. 6.

### REFERENCE SYMBOLS

- 1: Rigid core
- 2: Bead-holding ring
- 2a: Hole
- 3: Double-end stud
- 3a: Male screw portion
- 5: Rotational shaft of tire building machine
- 6: Attachment
- 7: Nut
- 10: (Green) tire
- 11: Bead portion
- 20: Preheating station
- 21: Preheating apparatus
- 22: Warm air inlet
- 23: Warm air outlet
- 25: Preheating chamber
- 30: Curing mold
- 31,32: Sidewall-mold
- 33: Tread-mold
- 33a: Segment
- 35: Lower plate

### BEST MODE FOR CARRYING OUT THE INVENTION

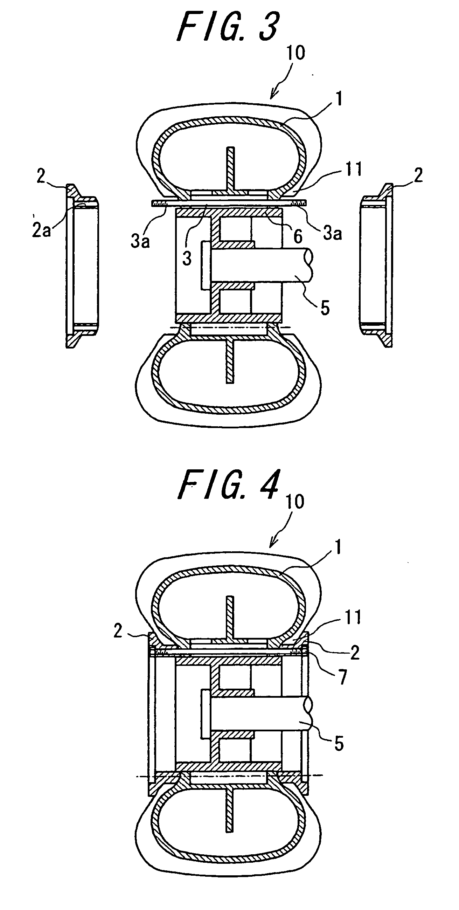

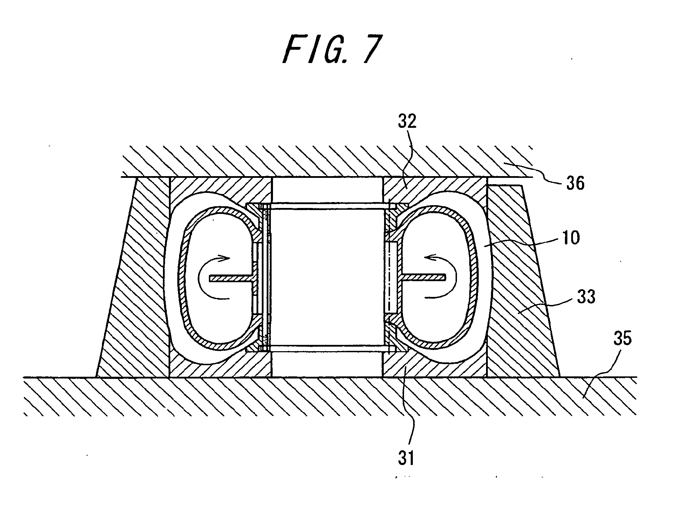

An embodiment of the present invention will be described hereinafter with reference to the drawings. Fig.3 - Fig.7 are schematic cross-sectional view of a tire at each stage in tire processing, to explain the tire manufacturing method of the present invention. In tire building process a green tire 10 is formed at a tire building station, by applying such tire components as an inner liner, bead cores, carcass ply(s), belt plies, sidewall rubbers, or, a tread rubber, in sequence onto a rigid core 5 which is installed on the rotational shaft of a tire building machine, through the attachment 6 as shown in Fig.3.

Thereafter, each of bead-holding rings which have been standing by at the lateral outside of the rigid core 1, is transferred towards the lateral center of the rigid core 1 until it touches a corresponding bead portion of the green tire 10, then halted there. On the rigid core 10, a plurality of double-end studs 3 with male screw portions 3a on both ends being installed circumferentially, while holes 2a being formed for letting these studs 3 through, it is capable reliably to fix a pair of bead-holding rings to the rigid core 10 with corresponding portions of a tire therebetween as shown in Fig. 4, by screwing nuts 7 to the male screw portions 3a protruding out of the holes 2a towards the lateral outside, after a pair of bead-holding rings 2 touches bead portions of the tire respectively.

Hereinafter, the green tire 10 is taken out of the rotational shaft of a tire building machine and transferred to a green tire preheating station 20. A customizes transferring machine or a handling robot can be used for this transfer.

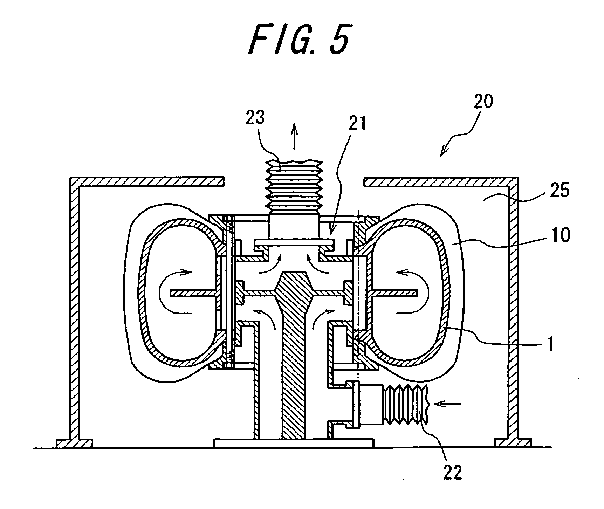

At a preheating station 20, the rigid core 1 is set onto a preheating apparatus 21 installed in a preheating chamber 25 as shown Fig. 5. The temperature in the preheating chamber 25 is controlled to be higher than the room temperature and preheating apparatus 21 being configured so that the air with high temperature taken from a warm air inlet 22 circulates inside the rigid core 1, then goes out to a warm air outlet 23, both the green tire 10 and the rigid core 1 are heated up to the predetermined temperature. The green tire 10 is kept attached on the rigid core 1 during all the period while they are preheated at the preheating station 20, and the green tire finished with preheating is taken out of the preheating apparatus 21 together with the rigid core 1 attached, and transferred to the tire curing station.

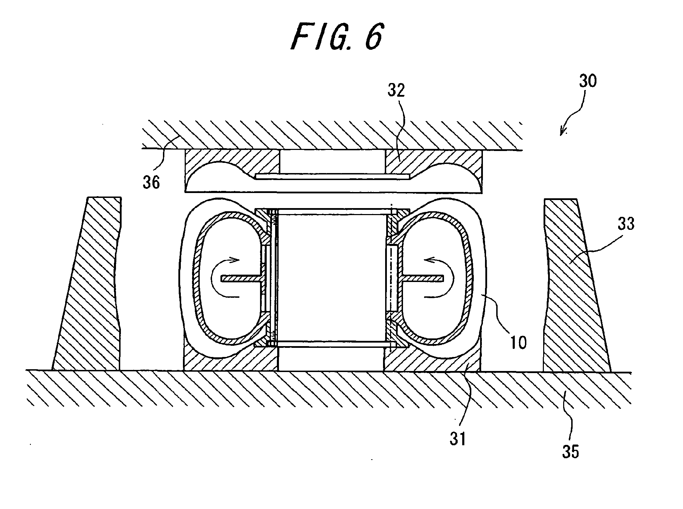

At the tire curing station, being arranged a curing mold 30 specifying the outer surface of the tire 10 and transmitting the heat to the green tire 10 from the outside, the curing mold 30 consists of, as shown in cross-sectional view in Fig. 6, a pair of sidewall-molds 31, 32 specifying an outer surface shape of the tire sidewall portions, a tread-mold 33 specifying an outer surface shape of the tire tread portion, and a pair of bead-mold specifying an outer surface shape of the tire bead portions. As explained already, in this embodiment of the present invention, it is preferable to use a pair of bead-holding rings 2 as a pair of bead-molds, since a green tire 10 is transferred to the curing station together with a pair of bead-holding rings 2 attached.

The sidewall-molds 31, 32 are installed to a lower plate 35 and a upper plate 36 which are displaced closer and away against each other, respectively, and the circumferentially arranged segments 33a constituting the tread-mold 33 are capable to relocate in the radial direction on the lower plate 35. At the state that the curing mold is opened, sidewall-molds 31, 32, tread-mold 33, and the bead-holding rings 2 are placed apart from each other, and the curing mold is capable of containing a green tire transferred therein, and at this state, a green tire transferred form the preheating station 20 is placed on the lower sidewall-mold.

After that, the curing mold 30 is closed by displacing sidewall-molds 31, 32, tread-mold 33, and bead-holding rings 2 closer to the each other and touching them each other, and then the curing process is started.

When the curing process is finished, the curing mold is again opened, and a cured tire including bead-holding rings 2, and the rigid core 1 is taken out of the curing mold 30, then at a rigid-core-assembling-disassembling station, bead-holding rings 2 are firstly disassembled out of the cured tire 1, then the rigid core 1 is taken out of the cured tire 10 after it is disassembled into pieces.

After that, a cured tire is transferred to the inspection process, while the disassembled rigid core 1 is reassembled at the rigid-core-assembling-disassembling station and the transferred to the tire building station together with the bead-holding rings 2 which have been already disassembled, in order to be ready fore next green tire forming.

According to the method explained as above, since this invention restrict the deformation of tire bead portions by means of the bead-holding rings 2 from the beginning of preheating process to the end of the curing process, it is capable of preventing that the side portions of the carcass being moved apart from the main portion.

Abovementioned method can be applied for manufacturing various kinds of tires.

## Claims

1. A method of manufacturing a tire having at least one carcass ply turned up around a pair of bead cores, comprising steps of: forming a green tire (10) by assembling tire components on a rigid core (1) having an outer surface corresponding to the inner surface shape of a product tire, transferring the rigid core (1) to a preheating station (20), preheating said green tire (10) together with the rigid core (1) attached, at the preheating station (20), and curing said green tire (10) in a curing mold (30),
wherein said method further comprises a step of assembling a pair of bead-holding rings (2) to the rigid core (1) prior to transferring the rigid core (1) to the preheating station (20); each bead-holding ring (2) holding a corresponding bead portion (11) of the green tire (10) from the lateral outside.

2. A method of manufacturing a tire according to Claim 1, further comprising a step of placing the green tire (10) in the curing mold (30) together with the bead-holding rings attached on the rigid core (1).

3. A method of manufacturing a tire according to Claim 1 or 2, wherein the step of assembling the pair of bead-holding rings (2) to the rigid core (1) is performed by connecting the pair of bead-holding rings (2) to each other.

4. A tire curing mold (30) to be utilized for the method of manufacturing a tire according to any one of Claims 1-3, comprising a tread-mold (33) specifying an outer surface shape of tire tread portion, the tread-mold (33) consisting of plural segments disposed in the tire circumferential direction, a pair of sidewall-molds (31, 32) specifying an outer surface shape of tire sidewall portions, and a pair of bead-molds specifying an outer surface shape of tire bead portions, each said bead-mold consisting of said bead-holding ring (2), **characterized in that**
the pair of bead-molds are configured to be inserted into and removed from the mold with the tire.

## Patentansprüche

1. Verfahren zur Herstellung eines Reifens, der mindestens eine Karkassenlage aufweist, die um ein Paar Wulstkerne umgestülpt ist, das die folgenden Schritte aufweist:
Formen eines Reifenrohlings (10) durch Zusammenbauen von Reifenteilen auf einem starren Kern (1) mit einer äußeren Oberfläche, die der inneren Oberflächenform eines Produktreifens entspricht; Übertragen des starren Kerns (1) zu einer Vorheizstation (20);
Vorheizen des Reifenrohlings (10) zusammen mit dem angebrachten starren Kern (1) in einer Vorheizstation (20); und Vulkanisieren des Reifenrohlings (10) in einer Vulkanisierform (30);
wobei das Verfahren außerdem einen Schritt des Montierens eines Paares von Wulsthalteringen (2) am starren Kern (1) vor dem Übertragen des starren Kerns (1) zur Vorheizstation (20) aufweist, wobei ein jeder Wulsthaltering (2) einen entsprechenden Wulstabschnitt (11) des Reifenrohlings (10) von der lateralen äußeren Seite hält.

2. Verfahren zur Herstellung eines Reifens nach Anspruch 1, das außerdem einen Schritt des Anordnens des Reifenrohlings (10) in der Vulkanisierform (30) zusammen mit den am starren Kern (1) angebrachten Wulsthalteringen aufweist.

3. Verfahren zur Herstellung eines Reifens nach Anspruch 1 oder 2, bei dem der Schritt des Montierens des Paares der Wulsthalteringe (2) am starren Kern (1) durch Verbinden des Paares der Wulsthalteringe (2) miteinander durchgeführt wird.

4. Reifenvulkanisierform (30), die für das Verfahren zur Herstellung eines Reifens nach einem der Ansprüche 1 bis 3 genutzt wird, die aufweist: eine Laufflächenform (33), die eine äußere Oberflächenform des Reifenlaufflächenabschnittes spezifiziert, wobei die Laufflächenform (33) aus mehreren Segmenten besteht, die in der Reifenumfangsrichtung angeordnet sind; ein Paar Seitenwandformen (31, 32), die eine äußere Oberflächenform der Reifenseitenwandabschnitte spezifizieren; und ein Paar Wulstformen, die eine äußere Oberflächenform der Reifenwulstabschnitte spezifizieren, wobei jede Wulstform aus dem Wulsthaltering (2) besteht, **dadurch gekennzeichnet, dass**
das Paar der Wulstformen so ausgebildet ist, dass sie mit dem Reifen in die Form eingesetzt und daraus entfernt werden.

## Revendications

1. Procédé de fabrication d'un bandage pneumatique, comportant au moins une nappe de carcasse retournée autour d'une paire de tringles, comprenant les étapes ci-dessous : formation d'un bandage pneumatique cru (10) en assemblant des composants du bandage pneumatique sur un noyau rigide (1), comportant une surface externe correspondant à la forme de la surface interne d'un bandage pneumatique fini, transfert du noyau rigide (1) vers une station de préchauffage (20), préchauffage dudit bandage pneumatique cru (10) ensemble avec le noyau rigide (1) qui y est fixé, dans la station de préchauffage (20), et vulcanisation dudit bandage pneumatique cru (10) dans un moule de vulcanisation (30) ;
ledit procédé comprenant en outre une étape d'assemblage d'une paire de bagues de retenue des talons (2) sur le noyau rigide (1) avant de transférer le noyau rigide (1) vers la station de préchauffage (20), chaque bague de retenue des talons (2) retenant une partie de talon correspondante (11) du bandage pneumatique cru (10) à partir d'un côté latéral externe.

2. Procédé de fabrication d'un bandage pneumatique selon la revendication 1, comprenant en outre une étape de positionnement du bandage pneumatique cru (10) dans le moule de vulcanisation (30), ensemble avec les bagues de retenue des talons fixées sur le noyau rigide (1).

3. Procédé de fabrication d'un bandage pneumatique selon les revendications 1 ou 2, dans lequel l'étape d'assemblage de la paire de bagues de retenue des talons (2) sur le noyau rigide (1) est effectuée en connectant la paire de bagues de retenue des talons (2) l'une à l'autre.

4. Moule de vulcanisation d'un bandage pneumatique (20), destiné à être utilisé pour le procédé de fabrication d'un bandage pneumatique selon l'une quelconque des revendications 1 à 3, comprenant une moule de la bande de roulement (33), spécifiant une forme de la surface externe de la partie de bande de roulement du bandage pneumatique, le moule de la bande de roulement (33) comprenant plusieurs segments agencés dans la direction circonférentielle du bandage pneumatique, une paire de moules des flancs (31, 32), spécifiant une forme de la surface externe des parties de flanc du bandage pneumatique, et une paire de moules des talons, spécifiant une forme de la surface externe des parties de talon du bandage pneumatique, chaque dit moule des talons étant constitué par ladite bague de retenue des talons (2), **caractérisé en ce que**
la paire de moules des talons est configurée de sorte à être insérée dans le moule et retirée de celui-ci avec le bandage pneumatique.
